# EUROPÄISCHE PATENTSCHRIFT

(11) **EP 0 728 715 B1**
(45) Veröffentlichungstag und Bekanntmachung des Hinweises auf die Patenterteilung: **12.11.1997**
(21) Anmeldenummer: 96102654.9
(22) Anmeldetag: 22.02.1996
(51) Int. Cl.: C04B 28/14

(54) **Verfahren zur Hydrophobierung von Gipswerkstoffen**
Process for hydrophobing gypsum products
Procédé pour rendre hydrophobe des produits en gypse

(30) Priorität: 23.02.1995 DE 19506398
(43) Veröffentlichungstag der Anmeldung: 28.08.1996
(73) Patentinhaber: Wacker-Chemie GmbH, 81737 München (DE)
(72) Erfinder: Adler, Klaus, Dr., 84489 Burghausen (DE); Gubisch, Erwin, 84489 Burghausen (DE); Sommerauer, Alois, 5121 Tarsdorf (AT)
(74) Vertreter: Schuderer, Michael

(56) Entgegenhaltungen:
- EP-A- 0 320 982
- EP-A- 0 496 682
- FR-A- 2 153 579
- US-A- 3 671 280
- US-A- 3 869 415

## Beschreibung

Die Erfindung betrifft ein Verfahren zur Hydrophobierung von Gipswerkstoffen durch Zusatz einer Kombination aus in Wasser redispergierbaren Dispersionspulvern und thixotropen Additiven.

Gips ist ein in großen Mengen preiswert zur Verfügung stehender Baustoff. Neben natürlich vorkommenden Gipsen werden erhebliche Mengen von Gips aus Rauchgasentschwefelungsanlagen gewonnen, an dessen Verwertung weltweit Interesse besteht. Neben dem Einsatz von Gips in Fugenmassen werden Gipsmörtel vor allem für Innenputze und Beschichtungen eingesetzt. Wegen ihrer Wasserempfindlichkeit, welche sich auch in einem ungenügenden Frost/Tau-Verhalten ausdrückt, dürfen laut DIN-Norm 18550 Putze, die als Bindemittel Baugips enthalten, mit und ohne Anteile von Baukalk, nur für Innenputze mit dafür üblicher Beanspruchung, aber nicht für Feuchträume oder für Außenputze eingesetzt werden.

Da Gips unter Volumenzunahme erhärtet, ist er für Beschichtungen und Formkörper das ideale Bindemittel, um etwaige Rißbildung zu vermeiden. Es hat daher nicht an Versuchen gefehlt, Fassaden mit Gips als Bindemittel zu erstellen, beispielsweise von Wohnhäusern in der Gründerzeit. Diese Fassaden mußten aber durch eine besondere Imprägnier- und Anstrichtechnik mit heißem Leinöl behandelt werden, um sie bewitterungsbeständig auszurüsten. Nachteilig sind dabei der hohe Zeitaufwand und die hohen Kosten dieser Arbeitstechnik.

Für die Hydrophobierung von Gipsmörteln wird auch die Verwendung von Siliconen oder Siloxanen, Stearaten und Paraffinwachsen vorgeschlagen. So ist beispielsweise aus der DE-A 3704439 (US-A 4851047) bekannt, die Witterungsbeständigkeit von Gipswerkstoffen durch Zusatz von Organopolysiloxanen zum Gipsmörtel zu verbessern. Die JP-A 5/836 (Derwent-Abstract AN 93-49442) beschreibt die Hydrophobierung von Zement und Gips mit einem pulverförmigen Gemisch aus Organopolymer und Polysiloxan. Die JP-A 57/205352 (Derwent-Abstract AN 83-10505K) beschreibt die Herstellung von wasserbeständigen Gipsformkörpern durch Zugabe von Polymerlatex zum Gipsmörtel und anschließender Wärmebehandlung zur Aushärtung der Formkörper.

Weiter ist aus der EP-A 477900 (US-A 5118751) bekannt, Mörtel von anorganischen Bindemitteln wie Zement, Kalk oder Gips mit in Wasser redispergierbaren Dispersionspulvern zu modifizieren, um deren mechanischen Eigenschaften wie Haftung, Abriebbeständigkeit und Biegezugfestigkeit zu verbessern.

Der Erfindung lag die Aufgabe zugrunde, ein Verfahren zu entwickeln, mit dem die Wasseraufnahme von Gipswerkstoffen auf einfache Weise und kostengünstig reduziert wird und gleichzeitig die mechanische Festigkeit erhöht wird.

Gegenstand der Erfindung ist ein Verfahren zur Hydrophobierung von Gipswerkstoffen dadurch gekennzeichnet, daß zu einer pulverförmigen Gips-Zusammensetzung enthaltend 10 bis 90 Gew.% Gips, bezogen auf das Gesamtgewicht der Zusammensetzung, ein Gemisch aus
a) 1.0 bis 15.0 Gew.%, bezogen auf das Gesamtgewicht der Zusammensetzung, eines oder mehrerer in Wasser redispergierbarer Dispersionspulver auf der Basis von Vinylacetat-Mischpolymerisaten mit Ethylen und/oder Vinylestern von C₅- bis C₁₅-Monocarbonsäuren, Styrol-Mischpolymerisaten mit Acrylsäureestern von Alkoholen mit l bis 18 C-Atomen, Vinylchlorid-Mischpolymerisaten mit Ethylen und/oder Vinylestern von C₂- bis C₁₅-Monocarbonsäuren, und
b) 0.05 bis 5.0 Gew.%, bezogen auf das Gesamtgewicht der Zusammensetzung, eines oder mehrerer thixotroper Additive aus der Gruppe umfassend Polyacrylsäuren und deren Salze, Smektite, Bentonite, Carboxymethylcellulosen, Melaminformaldehyd-Kondensate
zugegeben wird.

Gegebenenfalls enthalten die genannten Polymerisate noch 0.05 bis 30.0 Gew%, vorzugsweise 0.5 bis 15 Gew%, jeweils bezogen auf das Gesamtgewicht des Polymerisats, ein oder mehrere Monomereinheiten aus der Gruppe der olefinisch ungesättigten, hydrolysierbaren Silane. Beispiele hierfür sind γ-Acryl- bzw. γ-Methacryloxypropyltri(alkoxy)silane und Vinyltrialkoxysilane, wobei als Alkoxygruppen z.B. Methoxy-, Ethoxy-, Methoxyethylen-, Ethoxyethylen-, Methoxypropylenglykolether- bzw. Ethoxypropylenglykolether-Reste eingesetzt werden können. Weiterhin ist das Trisacetoxyvinylsilan verwendbar. Bevorzugt werden Vinyltriethoxysilan, γ-Methacryloxypropyltriethoxysilan und Trisacetoxyvinylsilan.

Bevorzugte in Wasser redispergierbare Dispersionspulver a) sind auf Basis von:
Vinylacetat/Ethylen-Copolymerisaten mit 20 bis 50 Gew% Ethyleneinheiten;
Vinylacetat-Copolymerisaten mit 1 bis 40 Gew% Vinyllaurat-Einheiten und 50 bis 95 Gew% Einheiten von Vinylestern von α-verzweigten C₅- bis C₁₀-Monocarbonsäuren (Versaticsäure^{R}-Vinylester), sowie gegebenenfalls 5 bis 40 Gew% Ethylen-Einheiten, oder
Vinylacetat-Copolymerisaten mit 70 bis 95 Gew% Vinyllaurat-Einheiten oder Einheiten von Vinylestern von α-verzweigten C₅- bis C₁₀-Monocarbonsäuren (Versaticsäure^{R}-Vinylester);
Styrol-Copolymerisaten mit 40 bis 60 Gew% n-Butylacrylat- und/oder 2-Ethylhexylacrylat-Einheiten, oder
Vinylchlorid/Ethylen-Copolymerisaten mit einem Ethylen-Gehalt von 10 bis 40 Gew%;
Vinylchlorid-Copolymerisaten mit 10 bis 40 Gew% Ethylen-Einheiten und 5 bis 40 Gew% Vinyllaurat-Einheiten oder Einheiten von Vinylestern von α-verzweigten C₅- bis C₁₀-Monocarbonsäuren.

Die als bevorzugt genannten Polymerisate können darüberhinaus noch die vorher genannten Hilfsmonomere in den genannten Mengen enthalten. Die Angaben in Gew% für den Gehalt der Monomereinheiten in den genannten Polymerisaten addieren sich jeweils auf 100 Gew%.

Besonders bevorzugte Dispersionspulver a) sind solche auf Basis von:
Vinylacetat-Copolymerisaten mit 1 bis 40 Gew% Vinyllaurat-Einheiten und 1 bis 30 Gew% Einheiten von Vinylestern von α-verzweigten C₉- oder C₁₀-Monocarbonsäuren wie VeoVa9^{R} oder VeoVa10^{R};
Vinylacetat-Copolymerisaten mit 70 bis 95 Gew% Einheiten von Vinylestern von α-verzweigten C₉- oder C₁₀-Monocarbonsäuren wie VeoVa9^{R} oder VeoVa10^{R};
Vinylchlorid-Copolymerisaten mit 10 bis 40 Gew% Ethylen- und 5 bis 40 Gew% Vinyllaurat-Einheiten.

Die Herstellung der genannten Polymerisate erfolgt in bekannter Weise bevorzugt nach dem Emulsionspolymerisationsverfahren in wäßrigem Medium, unter Initiierung der Polymerisation mittels der dafür gebräuchlichen wasserlöslichen Radikalbildner und in Gegenwart der üblicherweise bei der Emulsionspolymerisation verwendeten Emulgatoren und Schutzkolloide. Zur Herstellung der Dispersionspulver wird die damit erhältliche wäßrige Dispersion in bekannter Weise, gegebenenfalls unter Zusatz von Verdüsungshilfsmitteln oder Antiblockmitteln, beispielsweise mittels Sprühtrocknung oder Gefriertrocknung, getrocknet, vorzugsweise sprühgetrocknet.

Als Komponente b) geeignet sind:
Hochmolekulare Homo- und Mischpolymerisate der Acrylsäure, deren Alkali- und Ammoniumsalze; in Wasser quellbare Schichtsilikate wie Smektite (Magnesium-Schichtsilikate), organisch modifizierte Smektite, Bentonite (Aluminium-Schichtsilikate), Montmorillonite; Carboxymethylcellulosen; wasserlösliche Melamin-Formaldehyd-Kondensate.

Bevorzugt werden organisch modifizierte Smektite und Bentonite, wie diese von der Industrie als Verdickungsmittel angeboten werden.

Unter den Gipsarten sind α- und β-Halbhydrat (CaSO₄·1/2H₂O) in Form von beispielsweise Baugips, Stuckgips oder Modellgips bevorzugt. Das erfindungsgemäße Verfahren eignet sich jedoch auch zur Modifizierung von anderen Gipsarten, wie Estrichgips, Marmorgips und Anhydrit. Gut geeignet ist auch das bei der Rauchgasentschwefelung anfallende Calciumsulfat (REHA-Gips).

Die Gipszusammensetzung kann weiter die üblichen Zuschläge und Zusatzstoffe enthalten. Übliche Zuschläge für Gipsmörtel sind Kalkhydrat zu vorzugsweise 1 bis 30 Gew.% sowie inerte Füllstoffe wie Calciumcarbonat, Dolomit, Leichtspat und/oder Quarzsand in üblichen Mengen, vorzugsweise zu 5 bis 80 Gew%.

Die Angaben in Gew.% beziehen sich jeweils auf das Gesamtgewicht der pulverförmigen Gipszusammensetzung. Zusätze, die die Verarbeitbarkeit der Gipszusammensetzung bzw. die Eigenschaften damit gefertigter Produkte verbessern, sind beispielsweise Salze langkettiger Fettsäuren wie Ca-Stearat, Na-Oleat, Siliconbautenschutzmittel, Fungizide, Faserstoffe, Beschleuniger wie Di-Kaliumhydrogensulfat, Verzögerer wie Tartrate.

Zur Modifizierung des Gipses werden das Dispersionspulver a) und das Additiv b) in geeigneten Mischern mit dem Gips und gegebenenfalls weiteren Zuschlägen und Zusatzstoffen gemischt und homogenisiert. Das Dispersionspulver kann gegebenenfalls auch in Form einer wäßrigen Dispersion zugegeben werden. Die Additive b) können auch in Form deren wäßrigen Lösungen oder Suspensionen zugegeben werden. Vorzugsweise wird eine trockene Gipszusammensetzung hergestellt und das zur Verarbeitung erforderliche Wasser an der Baustelle vor der Verarbeitung zugemischt.

Die erfindungsgemäß hergestellten Gipszusammensetzungen eignen sich vor allem für die Verwendung als Gipsmörtel für Putze oder Stukkaturen speziell im Außenbereich. Weitere Verwendungen sind beispielsweise die als Spachtelmassen oder die Verwendung zur Herstellung von Gipsplatten oder Gipsformen.

Mit der Erfindung wurde überraschenderweise gefunden, daß die Wasseraufnahme und damit die Bewitterungsbeständigkeit von Gipsputzen, die erfindungsgemäß mit der Kombination aus a) Dispersionspulver und b) definierte thixotrope Additive hergestellt werden, entscheidend verbessert werden. Wie die Vergleichsbeispiele zeigen, wird diese Verbesserung weder mit Dispersionspulver allein, noch mit Dispersionspulvern in Kombination mit herkömmlichen Verdickungsmitteln wie Celluloseether und/oder Stärkeether erhalten.

Die erfindungsgemäße, synergistisch wirkende Kombination von in Wasser redipergierbaren Dispersionspulvern a) mit den Komponenten b) führt zu Gipsputzen, die auch nach mehrjähriger Außenbewitterung keinen Verlust der Haftfestigkeit zeigen. Der Vergleich der Putze auf Basis der erfindungsgemäßen Beispiele mit den Putzen auf Basis der Vergleichsbeispiele zeigt, daß mit der obengenannten Kombination bewitterungsfeste Gipsputze herstellbar sind, während mit herkömmlichen Verdickungsmitteln, wie Celluloseether oder Stärkeether modifizierte Gipsputze, selbst in Anwesenheit von Dispersionspulver, verwittern. Überraschend war, daß die mit dem erfindungsgemäßen Verfahren modifizierten Gipszusammensetzungen zu Gipsputzen führten, welche selbst nach mehrjähriger Außenbewitterung keinen Verlust der Haftfestigkeit zeigen: Die Haftfestigkeit der Gipsputze, die direkt der Bewitterung (Regen und Frost) ausgesetzt waren, wird im Vergleich zu den abgedeckten Putzen nicht beeinflußt.

Die nachfolgenden Beispiele dienen zur weiteren Erläuterung der Erfindung:

### Herstellung der Mörtelmischung:

In den Beispielen 1 bis 8 und in den Vergleichsbeispielen 1 bis 3 wurden Gipsmörtel mit den in den Tabellen 1 und 2 angegebenen Rezepturen hergestellt. Dazu wurden die Rezepturbestandteile trocken vorgemischt, der Wasseranteil in einem Mörtelmischer vorgelegt und die Trockenmischung eingerührt. Die Basisrezeptur war zusammengesetzt aus:

| | |
|---|---|
| 300 Gewichtsteilen | Gips (Primoplast) |
| 400 " | Quarzsand No. 9a (Korngröße 0.1-0.4 mm) |
| 214 " | Quarzmehl No. 10 (Korngröße bis 0.09 mm) |
| 50 " | Kalkhydrat |
| 2 " | Fungizid Ca 24 |
| 1.5 " | Di-Kaliumhydrogenphosphat |
| 400 " | Wasser |

### Beispiel 1:

In die Basisrezeptur wurden noch 30 Gewichtsteile Dispersionspulver auf der Basis eines Vinylchlorid/Vinyllaurat/Ethylen-Copolymerisats (Vinnapas RI 551 Z, Wacker-Chemie GmbH) als Komponente a), und 2.0 Gewichtsteile Polyacrylsäure-Pulver (Rohagit S, Röhm GmbH) als Komponente b) eingearbeitet.

### Beispiel 2:

In die Basisrezeptur wurden noch 30 Gewichtsteile Dispersionspulver auf der Basis eines Vinylchlorid/Vinyllaurat/Ethylen-Copolymerisats (Vinnapas RI 551 Z, Wacker-Chemie GmbH) als Komponente a), und 2.0 Gewichtsteile wasserlösliches Melaminformaldehyd-Pulver (Madurit MW 330, Hoechst AG) als Komponente b) eingearbeitet.

### Beispiel 3:

In die Basisrezeptur wurden noch 30 Gewichtsteile Dispersionspulver auf der Basis eines Vinylchlorid/Vinyllaurat/Ethylen-Copolymerisats (Vinnapas RI 551 Z, Wacker-Chemie GmbH) als Komponente a), und 2.0 Gewichtsteile Polyacrylsäure-Pulver (Carbopol 941, Goodyear) als Komponente b) eingearbeitet.

### Beispiel 4:

In die Basisrezeptur wurden noch 30 Gewichtsteile Dispersionspulver auf der Basis eines Vinylchlorid/Vinyllaurat/Ethylen-Copolymerisats (Vinnapas RI 551 Z, Wacker-Chemie GmbH) als Komponente a), und 2.0 Gewichtsteile Polyacrylsäure-Pulver (Carbopol 910, Goodyear) als Komponente b) eingearbeitet.

### Beispiel 5:

In die Basisrezeptur wurden noch 30 Gewichtsteile Dispersionspulver auf der Basis eines Vinylchlorid/Vinyllaurat/Ethylen-Copolymerisats (Vinnapas RI 551 Z, Wacker-Chemie GmbH) als Komponente a), und 4.0 Gewichtsteile organisch modifizierter Smektit (Magnesium-Schichtsilikat Bentone LT, Kronos-Titan GmbH) als Komponente b) eingearbeitet.

### Beispiel 6:

In die Basisrezeptur wurden noch 30 Gewichtsteile Dispersionspulver auf der Basis eines Vinylchlorid/Vinyllaurat/Ethylen-Copolymerisats (Vinnapas RI 551 Z, Wacker-Chemie GmbH) als Komponente a), und 4.0 Gewichtsteile Bentonit (Aluminium-Schichtsilikat Thixoton CV 15, Südchemie AG) als Komponente b) eingearbeitet.

### Beispiel 7:

In die Basisrezeptur wurden noch 30 Gewichtsteile Dispersionspulver auf der Basis eines Vinylchlorid/Vinyllaurat/Ethylen-Copolymerisats (Vinnapas RI 551 Z, Wacker-Chemie GmbH) als Komponente a), und 4.0 Gewichtsteile Bentonit (Aluminium-Schichtsilikat Thixoton CV 15, Südchemie AG) sowie 2.0 Gewichtsteile Polyacrylsäure-Pulver (Carbopol 910, Goodyear) als Komponente b) eingearbeitet.

### Beispiel 8:

In die Basisrezeptur wurden noch 30 Gewichtsteile Dispersionspulver auf der Basis eines Vinylchlorid/Vinyllaurat/Ethylen-Copolymerisats (Vinnapas RI 551 Z, Wacker-Chemie GmbH) als Komponente a), und 2.0 Gewichtsteile Carboxymethylcellulose (CMC CS 800, Wolff-Walsrode AG) als Komponente b) eingearbeitet.

### Vergleichsbeispiel 1:

In die Basisrezeptur wurden herkömmliche Verdickungsmittel, nämlich 2.0 Teile Methylcellulose (Tylose MC 6000 P, Fa. Hoechst AG) und 0.5 Gewichtsteile Stärkeether (Amylotex 7086, Fa. Aqualon) eingearbeitet, und kein Dispersionspulver verwendet.

### Vergleichsbeispiel 2:

In die Basisrezeptur wurden herkömmliche Verdickungsmittel, nämlich 2.0 Teile Methylcellulose (Tylose MC 6000 P, Fa. Hoechst AG) und 0.5 Gewichtsteile Stärkeether (Amylotex 7086, Fa. Aqualon) eingearbeitet, und 30 Gewichtsteile Dispersionspulver auf der Basis eines Vinylacetat/Ethylen-Copolymerisats (Vinnapas RE 530 Z, Wacker-Chemie GmbH) als Komponente a), eingearbeitet.

### Vergleichsbeispiel 3:

In die Basisrezeptur wurden herkömmliche Verdickungsmittel, nämlich 2.0 Gewichtsteile Methylcellulose (Tylose MC 6000 P, Fa. Hoechst AG) und 0.5 Gewichtsteile Stärkeether (Amylotex 7086, Fa. Aqualon) eingearbeitet, und 30 Gewichtsteile Dispersionspulver auf der Basis eines Vinylchlorid/Vinyllaurat/Ethylen-Copolymerisats (Vinnapas RI 551 Z, Wacker-Chemie GmbH) als Komponente a), eingearbeitet.

### Anwendungstechnische Prüfung:

### Herstellung der Probekörper:

Die Mörtelmischungen der einzelnen Beispiele bzw. Vergleichsbeispiele wurden jeweils mit einer Traufel auf eine Zementplatte (Betongehwegplatte B550, 40x40x10 cm) aufgetragen und mit Hilfe einer Schablone eine Schichtstärke von 2 cm eingestellt. Anschließend wurden die beschichteten Platten 4 Wochen bei Normklima (23°C, 50 % relative Luftfeuchtigkeit) gelagert.

### Prüfung des Verarbeitungsverhaltens:

Das Verarbeitungsverhalten der Mörtel bei Auftragung wurde subjektiv beurteilt und mit "++" für "sehr gut" und "+" für "gut" bewertet. Die Ergebnisse sind in Tabelle 1 bzw. Tabelle 2 aufgeführt.

### Prüfung der Härte des Putzes:

Die Härte des Putzes wurde subjektiv beurteilt, wobei nach Ablauf der Lagerzeit der Putz mit einem Messer angeritzt wurde, und die Härte mit "++" für "sehr gut" und "+" für "gut" bewertet wurde. Die Ergebnisse sind in Tabelle 1 bzw. Tabelle 2 aufgeführt.

### Wassertropfenprobe:

Zur Prüfung der Wasseraufnahme wurde nach Ablauf der Lagerzeit ein Wassertropfen mit einem Volumen von 0.5 ml mittels einer Pipette auf die Oberfläche des Putzes appliziert und die Zeit bis zum Wegschlagen des Tropfens ermittelt. Die Ergebnisse sind in Tabelle 1 bzw. Tabelle 2 aufgeführt.

### Prüfung der Haftzugfestigkeit:

Zur Prüfung der Haftzugfestigkeit wurden die mit den Putzen aus den Beispielen bzw. Vergleichsbeispielen beschichteten Platten nach Ablauf der vierwöchigen Lagerzeit für 5 Jahre im Freien, in einem Aufstellungswinkel von 60° und in Südwest-Ausrichtung, gelagert. Die beschichteten Platten wurden durch eine Haube aus Aluminiumblech, die über die obere Stirnseite der Platte gestülpt wurde, teilweise (ca. 15 % der Fläche) vor direktem Niederschlagseinfluß geschützt. Nach Ablauf der 5 Jahre Expositionsdauer wurde die Haftung des abgedeckten und nicht abgedeckten Gipsputzes bestimmt. Dazu wurden einen Tag vor Prüftermin, jeweils im abgedeckten und nicht-abgedeckten Teil einer Platte, 6 Probekörper mit einer Bohrmaschine mit Bohrkrone (Durchmesser 55 mm) ausgebohrt. Auf den Probekörpern wurden dann Abzugskrampen mit einem 2-Komponenten-Kleber aufgeklebt. Die Haftzugfestigkeit wurde nach DIN 18156 mit einem Abzugsgerät der Fa. Herion, mit einer Laststeigerungsrate von 250 N/s bestimmt. Die Mittelwerte für die Haftzugfestigkeit der einzelnen Meßreihen sind in Tabelle 1 und 2 angegeben.

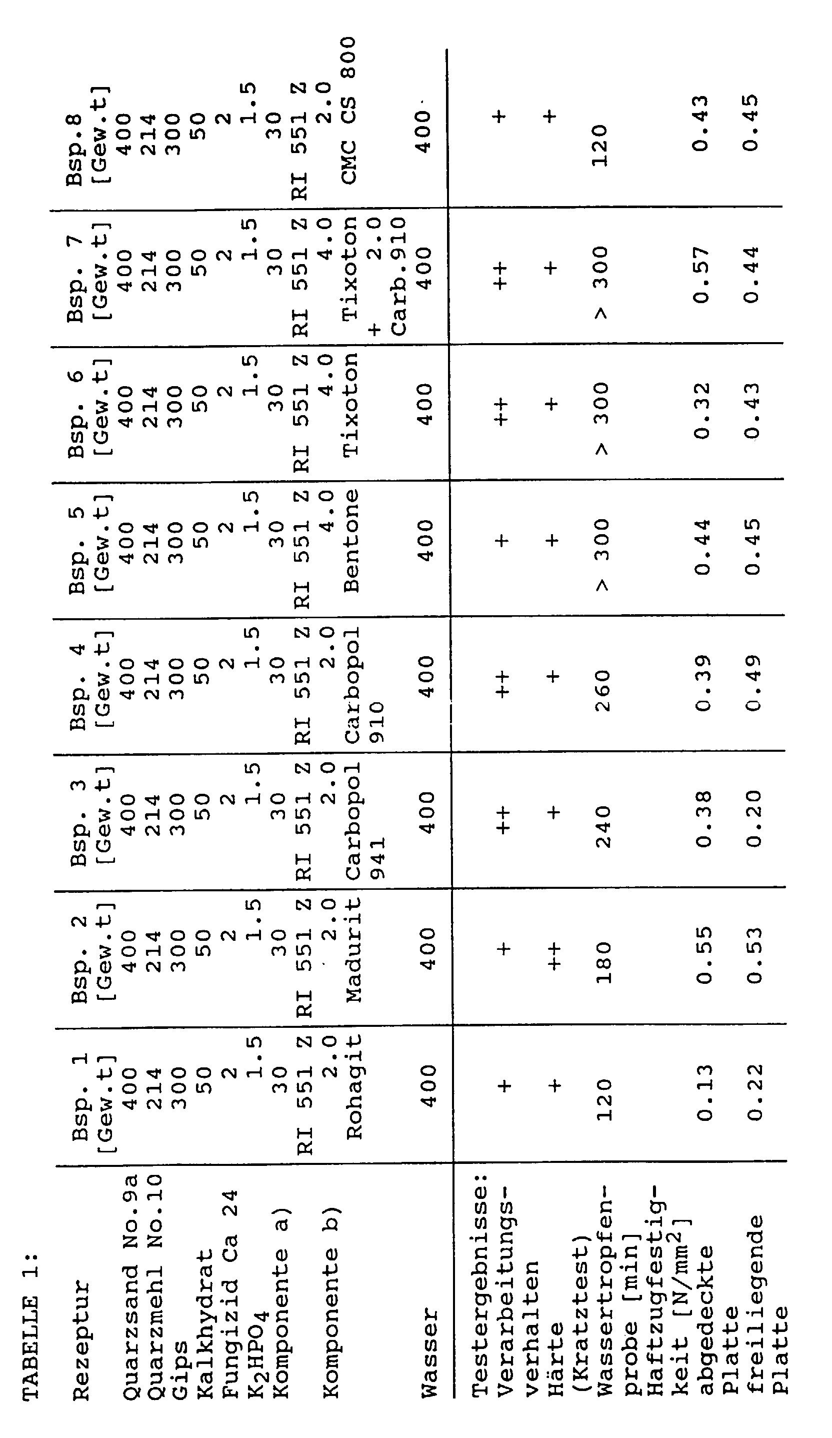

**TABELLE 2:**

| Rezeptur | Vergl.bsp. 1 [Gew.t] | Vergl.bsp. 2 [Gew.t] | Vergl.bsp. 3 [Gew.t] |
|---|---|---|---|
| Quarzsand No.9a | 400 | 400 | 400 |
| Quarzmehl No.10 | 214 | 214 | 214 |
| Gips | 300 | 300 | 300 |
| Kalkhydrat | 50 | 50 | 50 |
| Fungizid Ca 24 | 2 | 2 | 2 |
| K₂HPO₄ | 1.5 | 1.5 | 1.5 |
| Komponente a) | | 30 | 30 |
| | | RE 530 Z | RI 551 Z |
| Methylcellulose | 2.0 | 2.0 | 2.0 |
| Stärkeether | 0.5 | 0.5 | 0.5 |
| Wasser | 400 | 400 | 400 |

| Testergebnisse: | | | |
|---|---|---|---|
| Verarbeitungsverhalten | + | + | ++ |
| Härte | + | + | + |
| (Kratztest) | | | |
| Wassertropfenprobe [min] | 0.5 | 15 | 90 |
| Haftzugfestigkeit [N/mm²] abgedeckte Platte | nach 1.5 Jahren Haftungsverlust | nach 2 Jahren Haftungsverlust | 0.49 |
| freiliegende Platte | Putz verwittert, abgefallen | Putz abgefallen | 0.08 |

## Patentansprüche

1. Verfahren zur Hydrophobierung von Gipswerkstoffen dadurch gekennzeichnet, daß zu einer pulverförmigen Gips-Zusammensetzung enthaltend 10 bis 90 Gew% Gips bezogen auf das Gesamtgewicht der Zusammensetzung ein Gemisch aus
a) 1.0 bis 15.0 Gew%, bezogen auf das Gesamtgewicht der Zusammensetzung, eines oder mehrerer, in Wasser redispergierbarer Dispersionspulver auf der Basis von Vinylacetat-Mischpolymerisaten mit Ethylen und/oder Vinylestern von C₅- bis C₁₅-Monocarbonsäuren, Styrol-Mischpolymerisaten mit Acrylsäureestern von Alkoholen mit 1 bis 18 C-Atomen, Vinylchlorid-Mischpolymerisaten mit Ethylen und/oder Vinylestern von C₂- bis C₁₅-Monocarbonsäuren, und
b) 0.05 bis 5.0 Gew%, bezogen auf das Gesamtgewicht der Zusammensetzung, eines oder mehrerer thixotroper Additive aus der Gruppe umfassend Polyacrylsäuren und deren Salze, Smektite, Bentonite, Carboxymethylcellulosen, Melaminformaldehyd-Kondensate
zugegeben wird.

2. Verfahren nach Anspruch 1, dadurch gekennzeichnet, daß als in Wasser redispergierbare Polymerisate solche auf Basis von
Vinylacetat/Ethylen-Copolymerisaten mit 20 bis 50 Gew% Ethyleneinheiten,
Vinylacetat-Copolymerisaten mit 1 bis 40 Gew% Vinyllaurat-Einheiten und 50 bis 95 Gew% Einheiten von Vinylestern von α-verzweigten C₅- bis C₁₀- Monocarbonsäuren sowie gegebenenfalls 5 bis 40 Gew% Ethylen-Einheiten,
Vinylacetat-Copolymerisaten mit 70 bis 95 Gew% Vinyllaurat-Einheiten oder Einheiten von Vinylestern von α-verzweigten C₅- bis C₁₀-Monocarbonsäuren,
Styrol-Copolymerisaten mit 40 bis 60 Gew% n-Butylacrylat- und/oder 2-Ethylhexylacrylat-Einheiten, Vinylchlorid/Ethylen-Copolymerisaten mit einem Ethylen-Gehalt von 10 bis 40 Gew%,
Vinylchlorid-Copolymerisaten mit 10 bis 40 Gew% Ethylen-Einheiten und 5 bis 40 Gew% Vinyllaurat-Einheiten oder Einheiten von Vinylestern von α-verzweigten C₅- bis C₁₀-Monocarbonsäuren eingesetzt werden.

3. Verfahren nach Anspruch 1, dadurch gekennzeichnet, daß als in Wasser redispergierbare Polymerisate solche auf Basis von
Vinylacetat-Copolymerisaten mit 1 bis 40 Gew% Vinyllaurat-Einheiten und 1 bis 30 Gew% Einheiten von Vinylestern von α-verzweigten C₉- oder C₁₀-Monocarbonsäuren,
Vinylacetat-Copolymerisaten mit 70 bis 95 Gew% Einheiten von Vinylestern von α-verzweigten C₉- oder C₁₀-Monocarbonsäuren,
Vinylchlorid-Copolymerisaten mit 10 bis 40 Gew% Ethylen- und 5 bis 40 Gew% Vinyllaurat-Einheiten eingesetzt werden.

4. Verfahren nach Anspruch 1 bis 3, dadurch gekennzeichnet, daß als thixotrope Additive hochmolekulare Homo- und Mischpolymerisate der Acrylsäure, deren Alkali- und Ammoniumsalze; in Wasser quellbare Schichtsilikate wie Smektite (Magnesium-Schichtsilikate), organisch modifizierte Smektite, Bentonite (Aluminium-Schichtsilikate), Montmorillonite; Carboxymethylcellulosen; wasserlösliche Melamin-Formaldehyd-Kondensate eingesetzt werden.

5. Verfahren nach Anspruch 1 bis 3, dadurch gekennzeichnet, daß als thixotrope Additive organisch modifizierte Smektite und Bentonite, eingesetzt werden.

6. Verfahren nach Anspruch 1 bis 5, dadurch gekennzeichnet, daß als Gips α- und β-Halbhydrat (CaSO₄·1/2H₂O), Estrichgips, Marmorgips, Anhydrit oder bei der Rauchgasentschwefelung anfallendes Calciumsulfat (REHA-Gips) eingesetzt werden.

7. Verfahren nach Anspruch 1 bis 6, dadurch gekennzeichnet, daß die Komponenten a) und b) zusammen mit dem Gips und weiteren Zuschlägen bzw. Zusatzstoffen gemischt und homogenisiert werden.

8. Verwendung der nach Anspruch 1 bis 7 hergestellten Gipszusammensetzungen als Gipsmörtel für Putze oder Stukkaturen im Außenbereich.

9. Verwendung der nach Anspruch 1 bis 7 hergestellten Gipszusammensetzungen als Spachtelmassen oder zur Herstellung von Gipsplatten oder Gipsformen.

10. Verwendung eines Gemisches aus
a) einem oder mehreren, in Wasser redispergierbaren Dispersionspulvern auf der Basis von Vinylacetat-Mischpolymerisaten mit Ethylen und/oder Vinylestern von C₅- bis C₁₅-Monocarbonsäuren, Styrol-Mischpolymerisaten mit Acrylsäureestern von Alkoholen mit 1 bis 18 C-Atomen, Vinylchlorid-Mischpolymerisaten mit Ethylen und/oder Vinylestern von C₂- bis C₁₅-Monocarbonsäuren, und
b) einem oder mehreren thixotroper Additiven aus der Gruppe umfassend Polyacrylsäuren und deren Salze, Smektite, Bentonite, Carboxymethylcellulosen, Melaminformaldehyd-Kondensate
zur Hydrophobierung von Gipswerkstoffen.

## Claims

1. Process for waterproofing gypsum materials, characterized in that there is added, to a pulverulent gypsum plaster composition containing from 10 to 90% by weight of gypsum based on the total weight of the composition, a mixture of
a) from 1.0 to 15.0% by weight, based on the total weight of the composition, of one or more dispersion powders redispersible in water and based on vinyl acetate copolymers with ethylene and/or vinyl esters of C₅-C₁₅-monocarboxylic acids, styrene copolymers with acrylic esters of alcohols having from 1 to 18 carbon atoms,
vinyl chloride copolymers with ethylene and/or vinyl esters of C₂-C₁₅-monocarboxylic acids, and b) from 0.05 to 5.0% by weight, based on the total weight of the composition, of one or more thixotropic additives from the group consisting of polyacrylic acids and their salts, smectites, bentonites, carboxymethylcelluloses melamine-formaldehyde condensates.

2. Process according to Claim 1, characterized in that the polymers redispersible in water which are used are ones based on
vinyl acetate-ethylene copolymers containing from 20 to 50% by weight of ethylene units,
vinyl acetate copolymers containing from 1 to 40% by weight of vinyl laurate units and from 50 to 95% by weight of units of vinyl esters of α-branched C₅-C₁₀-monocarboxylic acids, and also, if desired, from 5 to 40% by weight of ethylene units,
vinyl acetate copolymers containing from 70 to 95% by weight of vinyl laurate units or units of vinyl esters of α-branched C₅-C₁₀-monocarboxylic acids,
styrene copolymers containing from 40 to 60% by weight of n-butyl acrylate and/or 2-ethylhexyl acrylate units,
vinyl chloride-ethylene copolymers having an ethylene content of from 10 to 40% by weight,
vinyl chloride copolymers containing from 10 to 40% by weight of ethylene units and from 5 to 40% by weight of vinyl laurate units or units of vinyl esters of α-branched C₅-C₁₀-monocarboxylic acids.

3. Process according to Claim 1, characterized in that the polymers redispersible in water which are used are ones based on
vinyl acetate copolymers containing from 1 to 40% by weight of vinyl laurate units and from 1 to 30% by weight of units of vinyl esters of α-branched C₉-C₁₀-monocarboxylic acids,
vinyl acetate copolymers containing from 70 to 95% by weight of units of vinyl esters of α-branched C₉-C₁₀-monocarboxylic acids,
vinyl chloride copolymers containing from 10 to 40% by weight of ethylene units and from 5 to 40% by weight of vinyl laurate units.

4. Process according to any of Claims 1 to 3, characterized in that the thixotropic additives used are high molecular weight homopolymers and copolymers of acrylic acid, their alkali metal and ammonium salts; water-swellable sheet silicates such as smectites (magnesium sheet silicates), organically modified smectites, bentonites (aluminium sheet silicates), montmorillonites; carboxymethylcelluloses; water-soluble melamine-formaldehyde condensates.

5. Process according to any of Claims 1 to 3, characterized in that the thixotropic additives used are organically modified smectites and bentonites.

6. Process according to any of Claims 1 to 5, characterized in that the gypsum plaster used is α- and β-hemihydrate (CaSO₄·1/2H₂O), flooring plaster, Keene's cement, anhydrite or calcium sulphate formed in flue gas desulphurization.

7. Process according to any of claims 1 to 6, characterized in that the components a) and b) are mixed and homogenized together with the gypsum plaster and the further constituents or additives.

8. Use of the gypsum plaster compositions prepared according to any of Claims 1 to 7 as gypsum mortar for renders or stucco work in exterior applications.

9. Use of the gypsum plaster compositions prepared according to any of Claims 1 to 7 as knifing fillers or for producing plasterboards or plaster moulds.

10. Use of a mixture of
a) one or more dispersion powders redispersible in water and based on vinyl acetate copolymers with ethylene and/or vinyl esters of C₅-C₁₅-monocarboxylic acids, styrene copolymers with acrylic acid esters of alcohols having from 1 to 18 carbon atoms, vinyl chloride copolymers with ethylene and/or vinyl esters of C₂-C₁₅-monocarboxylic acids, and
b) one or more thixotropic additives from the group consisting of polyacrylic acids and their salts, smectites, bentonites, carboxymethylcelluloses, melamine-formaldehyde condensates
for waterproofing gypsum materials.

## Revendications

1. Procédé pour rendre hydrophobes des matériaux en gypse, caractérisé en ce que l'on ajoute, à une composition pulvérulente de gypse contenant 10 à 90% en poids de gypse, par rapport au poids total de la composition, un mélange de :
a) 1,0 à 15,0% en poids, par rapport au poids total de la composition, d'une ou de plusieurs poudres de dispersion, redispersibles dans l'eau, à base de
copolymères d'acétate de vinyle avec de l'éthylène et/ou des esters vinyliques d'acides monocarboxyliques en C₅₋₁₅,
de copolymères de styrène avec des esters acryliques d'alcools avec 1 à 18 atomes de carbone,
de copolymères de chlorure de vinyle avec de l'éthylène et/ou des esters vinyliques d'acides monocarboxyliques en C₂₋₁₅, et
b) de 0,05 à 5,0% en poids, par rapport au poids total de la composition, d'un ou de plusieurs additifs thixotropes du groupe comprenant des poly(acides acryliques) et leurs sels, des smectites, des bentonites, des carboxyméthylcelluloses, des produits de condensation de mélamine-formaldéhyde.

2. Procédé suivant la revendication 1, caractérisé en ce que les polymères redispersibles dans l'eau utilisés sont ceux qui sont à base
de copolymères d'acétate de vinyle et d'éthylène avec 20 à 50% en poids de motifs éthylène,
de copolymères d'acétate de vinyle avec 1 à 40% en poids de motifs laurate de vinyle et 50 à 95% en poids de motifs ester vinylique d'acides monocarboxyliques en C₅₋₁₀ α-ramifiés et, le cas échéant, 5 à 40% en poids de motifs éthylène,
de copolymères d'acétate de vinyle, avec 70 à 95% en poids de motifs laurate de vinyle ou de motifs ester vinylique d'acides monocarboxyliques en C₅₋₁₀ α-ramifiés,
de copolymères de styrène, avec 40 à 60% en poids de motifs acrylate de n-butyle et/ou de motifs acrylate de 2-éthylhexyle,
de copolymères de chlorure de vinyle et d'éthylène avec une teneur en éthylène de 10 à 40% en poids en éthylène,
de copolymères de chlorure de vinyle, avec 10 à 40% en poids de motifs éthylène et 5 à 40% en poids de motifs laurate de vinyle ou - de motifs ester vinylique d'acides monocarboxyliques en C₅₋₁₀ α-ramifiés.

3. Procédé suivant la revendication 1, caractérisé en ce que les polymères redispersibles dans l'eau utilisés sont ceux qui sont à base
de copolymères d'acétate de vinyle, avec 1 à 40% en poids de motifs laurate de vinyle et 1 à 30% en poids de motifs ester vinylique d'acides monocarboxyliques en C₉₋₁₀ α-ramifiés,
de copolymères d'acétate de vinyle, avec 70 à 95% en poids de motifs ester vinylique d'acides monocarboxyliques en C₉₋₁₀ α-ramifiés,
de copolymères de chlorure de vinyle, avec 10 à 40% en poids de motifs éthylène et 5 à 40% en poids de motifs laurate de vinyle.

4. Procédé suivant les revendications 1 à 3, caractérisé en ce que les additifs thixotropes utilisés sont des homopolymères et des copolymères de haut poids moléculaire de l'acide acrylique, leurs sels de métaux alcalins et d'ammonium; des silicates lamellaires gonflant dans l'eau, comme des smectites (silicates de magnésium lamellaires), des smectites modifiées par des substances organiques, des bentonites (silicates d'aluminium lamellaires), des montmorillonites; des carboxyméthylcelluloses; des produits de condensation de mélamine-formaldéhyde solubles dans l'eau.

5. Procédé suivant les revendications 1 à 3, caractérisé en ce que les additifs thixotropes utilisés sont des smectites modifiées par des substances organiques et des bentonites.

6. Procédé suivant les revendications 1 à 5, caractérisé en ce que le gypse utilisé est le (CaSO₄·1/2H₂O) α- et β-semihydrate, le plâtre à planchers, le plâtre aluné, l'anhydrite ou le sulfate de calcium formé lors de la désulfuration des gaz de fumée (gypse DGF).

7. Procédé suivant les revendications 1 à 6, caractérisé en ce que les composants a) et b) sont mélangés et homogénéisés avec le -gypse et d'autres adjuvants ou additifs.

8. Utilisation des compositions de gypse, préparées suivant les revendications 1 à 7, comme mortier de plâtre pour des enduits ou pour des stucages dans des applications extérieures.

9. Utilisation des compositions de gypse, préparées suivant les revendications 1 à 7, comme mastic ou pour la préparation de carreaux de plâtre ou de moules en plâtre.

10. Utilisation d'un mélange de
a) une ou plusieurs poudres de dispersion, redispersibles dans l'eau, à base
de copolymères d'acétate de vinyle avec de l'éthylène et/ou des esters vinyliques d'acides monocarboxyliques en C₅₋₁₅,
de copolymères de styrène avec des esters acryliques d'alcools avec 1 à 18 atomes de carbone,
de copolymères de chlorure de vinyle avec de l'éthylène et/ou des esters vinyliques d'acides monocarboxyliques en C₂₋₁₅, et
b) un ou plusieurs additifs thixotropes du groupe comprenant des poly(acides acryliques) et leurs sels, des smectites, des bentonites, des carboxyméthylcelluloses, des produits de condensation de mélamine-formaldéhyde,
pour rendre hydrophobes des matériaux en gypse.
